# EUROPÄISCHE PATENTSCHRIFT

(11) **EP 3 488 556 B1**
(45) Veröffentlichungstag und Bekanntmachung des Hinweises auf die Patenterteilung: **30.09.2020**
(21) Anmeldenummer: 17737250.5
(22) Anmeldetag: 04.07.2017
(51) Int. Cl.: H04L 9/32

(54) **SICHERES KONFIGURIEREN EINES GERÄTES**
SECURE CONFIGURATION OF A DEVICE
CONFIGURATION SÉCURISÉE D'UN APPAREIL

(30) Priorität: 24.08.2016 DE 102016215915
(43) Veröffentlichungstag der Anmeldung: 29.05.2019
(73) Patentinhaber: Siemens Aktiengesellschaft, 80333 München (DE)
(72) Erfinder: FALK, Rainer, 85586 Poing (DE)
(86) Internationale Anmeldenummer: PCT/EP2017/066606
(87) Internationale Veröffentlichungsnummer: WO 2018/036702

(56) Entgegenhaltungen:
- DE-A1-102014 206 989
- US-A1- 2015 379 510
- CHRISTIDIS KONSTANTINOS ET AL: "Blockchains and Smart Contracts for the Internet of Things", IEEE ACCESS, Bd. 4, 3. Juni 2016 (2016-06-03), Seiten 2292-2303, XP011613134, DOI: 10.1109/ACCESS.2016.2566339 [gefunden am 2016-06-03]

## Beschreibung

Die Erfindung betrifft ein Verfahren sowie eine Komponente zum sicheren Konfigurieren eines Gerätes mittels der Blockchain-Technologie.

Im industriellen Umfeld wird eine Konfiguration einer Vielzahl von Geräten, welche innerhalb eines Automatisierungsnetzwerkes vorgesehen sind, durchgeführt. Dabei werden Informationen zur Gerätekonfiguration in einem Datensatz bereitgestellt. Insbesondere sind zentrale Gerätemanagementserver vorgesehen, auf welchen die Datensätze mit der vorgesehenen Konfiguration gespeichert sind und von welchen Konfigurationen heruntergeladen werden für die Umsetzung auf einem Gerät.

Vor allem im industriellen Umfeld sind Konfigurationsdaten auf ihre Unversehrtheit oder Gültigkeit oder Herkunft hin zu überprüfen. Beispielsweise muss sichergestellt werden, dass unmanipulierte Parameter oder ein intaktes Programm oder eine passende Konfiguration in den Konfigurationsdaten enthalten sind, um beispielsweise Safety-Anforderungen oder Security-Anforderungen zu genügen.

Ein solcher Manipulationsschutz von Gerätekonfigurationsdaten wird herkömmlicherweise mittels zentraler Sicherheitsinstanzen gewährleistet. Insbesondere werden Public-Key-Infrastrukturen benutzt, um einen Gerätemanagementserver zu authentisieren. Das Vorsehen einer solchen zentralen Struktur ist teuer und aufwändig. Insbesondere für relativ kleine Automatisierungssysteme ist der Aufwand für das Erstellen einer zentralen Sicherheits- und Gerätemanagementinfrastruktur unrentabel.

US 2015/0379510 A1 betrifft ein Verfahren und ein System zum Verwenden von Blockchain Infrastruktur und Smart Contracts zur Monetisierung von Datentransaktionen mit Änderungen an den Daten, die in eine Datenlieferkette aufgenommen wurden.

DE 10 2014 206 989 A1 betrifft ein Verfahren zur deterministischen Autokonfiguration eines Gerätes beim Verbinden mit einer Vorrichtung unter Verwendung einer Konfigurationsdatenstruktur.

Christidis Konstantinos: "Blockchains and Smart Contracts for the internet of Things", IEEE Access, Bd. 4 Seiten 2292-2303, betrifft Blockchains und Smart Contracts Skripte die sich auf der Blockchain befinden und die die Automatisierung von mehrstufigen Prozessen ermöglichen.

Vor diesem Hintergrund ist es eine Aufgabe der vorliegenden Erfindung, ein sicheres Konfigurieren eines Gerätes zu vereinfachen.

Diese Aufgabe wird durch die in den unabhängigen Ansprüchen angegebenen Merkmale gelöst. Vorteilhafte Ausgestaltungen sind in den abhängigen Ansprüchen angegeben.

Die Erfindung betrifft ein Verfahren zum sicheren Konfigurieren eines Gerätes, aufweisend die folgenden Schritte:
- Ermitteln einer auf einer Kryptowährung basierenden Blockchain-Datenstruktur, wobei die Blockchain-Datenstruktur mindestens einen Block mit Transaktionsdaten aufweist;
- Ermitteln mindestens einer zu den Transaktionsdaten gehörigen Transaktion, wobei die Transaktion eine Gerätekonfigurationsinformation aufweist;
- Überprüfen der Blockchain-Datenstruktur; und
- Konfigurieren des Gerätes bei erfolgreicher Überprüfung in Abhängigkeit von der Gerätekonfigurationsinformation.

Die Blockchain-Technologie realisiert eine verteilte, dezentrale Datenbank, in der Transaktionen manipulationsgeschützt ablegbar sind. Dafür werden Transaktionen in einem Block hinterlegt. In einer solchen Blockchain-Datenstruktur ist neben einer oder mehreren Transaktionen ein Hashwert eines Vorgängerblockes hinterlegt. Der Schutz entsteht durch eine Mehrheit von vertrauenswürdigen Knoten in einem Blockchain-Netzwerk, welche ein sogenanntes Mining oder Validieren von Blöcken durchführt. Im Netz der an einer Blockchain teilnehmenden Knoten wird in regelmäßigen Abständen, beispielsweise alle 10 Minuten, ein neuer Block gebildet und dabei der Hashwert eines bestehenden Blockes mit hinterlegt. Bei diesem Mining-Prozess wird die Gültigkeit von im Block zu hinterlegenden Transaktionen geprüft. Zusätzlich wird ein sogenanntes kryptographisches Puzzle gelöst, für welches die Mining-Knoten Rechenkapazität aufbringen müssen. Der Aufwand wird beispielsweise durch einen bestimmten Betrag in der Kryptowährung, auf der die Blockchain beruht, belohnt. Das Lösen des kryptographischen Puzzles wird auch als Proof-of-Work-Nachweis bezeichnet. Es wird die Lösung einer rechenintensiven Aufgabe nachgewiesen, welche abhängig vom Inhalt eines Blockes zu lösen ist. Die Kette der Blöcke ist bei einer Vielzahl von Blockchain Knoten gespeichert, es erfolgt eine Synchronisation der teilnehmenden Knoten. Die Information zu den Transaktionen ist also redundant im Netz hinterlegt.

Da alle Blöcke basierend auf bestehenden Blöcken gebildet werden, indem der Haswert des Vorgängerblockes in einen neuen Block eingefügt wird, bildet sich eine Kette. Die Transaktionen sind somit vor Manipulation geschützt, da eine Kette bis zu einem initialen Block, auch Genesisblock genannt, durch die Verkettung der Blöcke nachvollzogen werden kann. Da die Transaktionen über das Blockchain-Netz verfügbar sind, kann nachvollzogen werden, ab welchem Block in der Kette beispielsweise ein Inhalt einer Transaktion nicht mehr mit vorherigen Versionen übereinstimmt. Die Transaktionen sind also manipulationsgeschützt in jeder verifizierten Blockchain hinterlegt. Ein Abändern einer Transaktion in einem Block, der bereits zu einem früheren Zeitpunkt im Netzwerk gebildet wurde, würde nachvollzogen werden können, wenn eine Prüfsummenbildung über die bestehenden Blöcke nachvollzogen wird.

Innerhalb eines Blockchain-Netzwerkes, das öffentlich ist, und in dem daher nicht jedem Knoten einzeln vertraut werden kann, wird ein Block durch Dritte im Netz befindliche Knoten, die insbesondere kein eigenständiges Mining durchführen, insbesondere dadurch validiert, dass eine bestimmte Zeit nach Erstellen des Blockes oder eine gewisse Anzahl an nach dem Block gebildeten Blöcken abgewartet wird, bis die Kette lange genug ist, dass ihr vertraut werden kann. Beispielsweise bildet sich parallel ein anderer Kettenpfad aus, der sich als nicht vertrauenswürdig herausstellt, da die Mehrzahl der Knoten die Transaktionen der darin gebildeten Blöcke oder eines Blockes nicht verifiziert, sondern stattdessen weitere Blöcke in der vertrauenswürdigen längeren Kette bildet. Dafür darf ein Angreifer nicht über mehr Rechenkapazität als der Rest der Blockchain gemeinsam verfügen, da er sonst durch ein betrügerisches eigenes Mining selbst schneller ausreichend lange Ketten bildet könnte.

Eine Blockchain-Datenstruktur oder ein Block umfasst Transaktionsdaten und mindestens einen Hashwert, der abhängig von einem Vorgängerblock gebildet ist. Dadurch wird eine Kette aus Transaktionen gebildet. Einmal in der Kette auftauchende Transaktionen sind nicht mehr unbemerkt veränderbar. Die Transaktionsdaten betreffen eine Transaktion oder mehrere Transaktionen. In einer Blockchain-Datenstruktur sind insbesondere eine Prüfsumme von Transaktionsdaten oder diese Prüfsumme sowie weitere Daten wie beispielsweise ein Zeitstempel enthalten. Beispielsweise wird eine Prüfsumme von Transaktionsdaten, welche aus mehreren Transaktionen bestehen, gebildet. Für die Prüfsummenbildung kommen insbesondere kryptographische Hash-Funktionen zum Einsatz.

Durch sogenanntes Mining der Blöcke gegen ein Incentive, welches beispielsweise durch einen Betrag der Kryptowährung geschaffen wird, besteht ein Interesse der dezentralen Netzstruktur, Blöcke als korrekt zu bestätigen oder zu validieren, d.h. ein Mining durchzuführen. Sofern die Mehrheit der Rechenkapazität in einem solchen verteilten Netz frei von Angreifern ist, d.h. kein Angreifer mehr Blöcke durch Mining ausgeben kann, insbesondere mehr kryptographische Puzzle lösen kann, als die vertrauenswürdigen Knoten zusammengenommen, kann einer Blockchain ab einer bestimmten Länge und insbesondere einem einzelnen Block nach einer gewissen Anzahl in einem Pfad der Kette nachfolgenden Blöcken vertraut werden.

Bekannte Blockchain-Systeme sind Bitcoin und Ethereum. Während Bitcoin ursprünglich für Kryptowährungstransfers geschaffen wurde, baut Ethereum auf das Einbinden von sogenannten Smart Contracts auf. Die in einem Smart Contract vereinbarten Bedingungen werden durch die Blockchain gesichert und der Vertrag selbst wird über das Netz abgewickelt. Das Umsetzen der Vertragsbedingungen wird über dazugehörige durchgeführte Transaktionen kontrolliert und in einem programmierten Smart Contract vorgesehene Folgeaktionen können je nach erfolgter Transaktion durchgeführt werden.

Für nicht-öffentliche Blockchain-Systeme sind auch Blockchains denkbar, bei denen ein Mining ohne Incentive durchgeführt wird, da beispielsweise allen Knoten vertraut wird.

Die Transaktionsdaten werden insbesondere nicht in Klartext in die Blockchain eingefügt, sondern es wird zur Bildung der Transaktionsdaten ein Hashwert der Transaktion gebildet. Die Transaktion selbst ist ebenfalls im Blockchain-Netzwerk verfügbar. Somit kann ein Überprüfen der Transaktion durch Mining-Knoten oder Miner durchgeführt werden. Die Transaktion in Klartext wird also im Netz verteilt und insbesondere von einem Gerät an einen oder mehrere Blockchain-Knoten gesendet.

Auf vorteilhafte Weise basieren die Transaktion und damit auch die Transaktionsdaten auf einer Gerätekonfigurationsinformation. Eine zu Transaktionsdaten gehörige Transaktion weist beispielsweise die Gerätekonfigurationsinformation im Klartext auf. Ebenso kann die Transaktion lediglich eine Prüfsumme der Gerätekonfigurationsinformation aufweisen. Insbesondere wird ein Mining dann aufgrund von weiteren in einer Transaktion enthaltenen Daten durchgeführt.

Das Ermitteln der Blockchain-Datenstruktur sowie der Transaktion wird beispielsweise von einem Gerät selbst, insbesondere von einem Prozessor des Gerätes, durchgeführt. Dafür ist das Gerät mit dem Blockchain-Netzwerk gekoppelt. Das Gerät ist insbesondere ein Knoten des Blockchain-Netzwerkes. Beispielsweise scannt das Gerät im Netz vorhandene Transaktionen in Hinblick darauf, ob diese eine für das Gerät vorgesehene Konfigurationsinformation aufweisen. Dies geschieht beispielsweise über einen Geräteidentifier. Es wird dann beispielsweise überprüft, ob die Transaktion vom Blockchain-Netz validiert wurde. Dafür werden Blöcke ermittelt, welche auf Basis der Transaktionen gebildet wurden und es wird analysiert, ob einem Block anhand einer Blockchain, d.h. einer Kette aus Blöcken, zu dieser Transaktion validiert wird. Insbesondere wird eine Länge der Kette überprüft oder eine Anzahl an auf den betreffenden Block mit der Transaktion folgenden Blöcken. Setzt sich eine Kette mit dem betreffenden Block durch, so wird davon ausgegangen, dass die in der Blockchain-Datenstruktur vorhandenen Transaktionsdaten vertrauenswürdig sind. In diesem Fall ist ein Überprüfen erfolgreich. Für das Überprüfen können Kriterien festgelegt werden, anhand derer die Prüfung als erfolgreich oder nicht erfolgreich eingestuft wird. Wird der zugrundeliegenden Transaktion vertraut, so wird die in der Transaktion enthaltene Gerätekonfigurationsinformation als unmanipuliert anerkannt. In einer anderen Variante kann ein Knoten die Blockchain prüfen, sodass er alle gültigen, durch die Blockchain bestätigten Transkationen kennt. Danach filtert er beispielsweise diejenigen Transaktionen heraus, die ihn betreffen, beispielsweise nur die aktuellste Transaktion. Falls die aktuelle ihn betreffende Transaktion vollständig ist und nicht nur Änderungen enthält, braucht er beispielsweise nicht notwendigerweise die früheren Transaktionen. Es sind weitere, optimierte Verfahren denkbar zur Ermittlung der relevanten Konfigurationsdaten. Beispielsweise wird heuristisch gesucht. Ist bekannt, dass Konfigurationsänderungen zu bestimmten Zeitpunkten bekannt gemacht werden, so können gezielt Blöcke und die darin bestätigten Transaktionen durchsucht werden, die in einem entsprechenden Zeitraum liegen.

Es entfällt auf vorteilhafte Weise eine aufwändige eigenständige Überprüfung durch das Gerät oder eine dem Gerät zugeordnete Instanz. Der aufwändige Schritt der Überprüfung der eigentlichen Transaktion wird in das Blockchain-Netzwerk verlegt und es ist clientseitig lediglich nötig, eine Blockchain-Datenstruktur anhand einer Stabilität der Blockchain zu validieren.

Die beschriebenen Schritte können ebenso auf einem Prozessor durchgeführt werden, welcher nicht auf dem Gerät ausgebildet ist. Es ist beispielsweise auf vorteilhafte Weise ein zentraler Rechner in einem Automatisierungsnetzwerk vorgesehen, welcher für mehrere zu konfigurierende Geräte der Anlage die entsprechenden Transaktionen mit der zugehörigen Blockchain-Datenstruktur ermittelt und überprüft und bei erfolgreicher Überprüfung eine Konfiguration der betreffenden Geräte veranlasst.

Die beschriebenen Schritte sind nicht in der aufgezählten Reihenfolge zu durchlaufen. Es ist ebenso vorteilhaft, dass beispielsweise ein Überprüfen der Blockchain-Datenstruktur zeitlich vor einem Ermitteln mindestens einer zu den Transaktionsdaten gehörigen Transaktion durchgeführt wird. Jede sinnvolle Reihenfolge wird der Fachmann aus der Beschreibung der Schritte ableiten können, ohne den Schutzbereich der Erfindung zu verlassen.

Gemäß einer Ausgestaltung weist die Gerätekonfigurationsinformation eine Konfiguration des Gerätes, einen Prüfwert einer Konfiguration des Gerätes und/oder eine Referenz auf eine Konfiguration, insbesondere einen Uniform Resource Identifier, auf. In der Transaktion selbst, welche im Blockchain-Netzwerk verfügbar ist, sind somit entweder direkt die Konfigurationsdaten für ein Gerät hinterlegt oder lediglich ein Prüfwert oder ein Verweis auf die einzustellende Konfiguration.

Gemäß einer Ausgestaltung weist der Block als Transaktionsdaten eine aus der Transaktion oder aus mehreren Transaktionen gebildete Prüfsumme auf und die Transaktion oder die mehreren Transaktionen werden mittels der Prüfsumme überprüft. In der Blockchain ist damit vorzugsweise nicht die Transaktion oder mehrere Transaktionen im Klartext abgelegt, sondern es ist insbesondere ein abhängig von einer oder mehreren Transaktionen ermittelter Hashwert eingetragen.

Gemäß einer Ausgestaltung sind die Transaktionsdaten oder die Transaktion durch eine kryptographische Prüfsumme geschützt und eine Überprüfung der Transaktionsdaten oder der Transaktion wird mit Hilfe der kryptographischen Prüfsumme und eines kryptographischen Schlüssels durchgeführt. Beispielsweise kann eine digitale Signatur in einen Block eingetragen werden, wobei ein Schlüsselpaar, welches durch einen bestimmten Betreiber festgelegt wird, für die Signaturbildung und Überprüfung verwendet wird.

Gemäß einer Ausgestaltung wird als kryptographischer Schlüssel ein Schlüssel eines zentral verwalteten Schlüsselpaares genutzt wird. Beispielsweise gibt die Gerätekonfigurationsinformation in der Transaktion an, dass eine neue Firmware oder ein Firmware-Update von einer bestimmten URL zu laden ist und nur mit einem passenden Master-Key ist eine kryptographische Prüfsumme, beispielsweise ein Message Authentication Code oder eine digitale Signatur, überprüfbar.

Alternativ wird die Transaktion durch eine vorausgehende Transaktion der Blockchain geschützt. Dazu kann eine erste Transaktion eine Initialkonfiguration des Gerätes angeben. Auf dem Gerät wird eine Information über diese Transaktion (Initialkonfiguration) z.B. durch den Hersteller bei der Fertigung oder bei der Inbetriebnahme konfiguriert. Dazu kann ein Identifier der Transaktion, z.B. deren Hashwert oder der zur Überprüfung der Signatur der Initialkonfiguration verwendbare öffentliche Schlüssel konfiguriert werden. Diese Transaktion umfasst einen weiteren öffentlichen Schlüssel bzw. einen Hash eines öffentlichen Schlüssels. Eine weitere Transaktion, deren Signatur mit dem öffentlichen Schlüssel der Transaktion mit der Initialkonfiguration überprüfbar ist, kann Änderungen bzw. eine neue Version der Konfiguration spezifizieren. In einer anderen Variante wird eine Kette von Konfigurationen gebildet. Eine Transaktion, die Konfigurationsinformation enthält, umfasst einen öffentlichen Schlüssel bzw. einen Hashwert eines öffentlichen Schlüssels. Eine aktualisierte Konfiguration, d.h. eine Nachfolge-Konfigurationstransaktion, wird als gültig erkannt, wenn deren Signatur mit dem angegebenen öffentlichen Schlüssel der Vorgänger überprüfbar ist. Hierbei wird also eine Kette von signierten Transaktionen mit jeweils aktueller Konfigurationsinformation gebildet.

Gemäß der Erfindung geben die Transaktionsdaten eine Zugehörigkeit von Konfigurationsdaten zu dem Gerät an und daraus werden zu dem Gerät gehörige Konfigurationsdaten ermittelt. So kann ein Gerät Transaktionen ermitteln, welche das Gerät betreffen. Für diese Transaktionen werden die relevanten Blöcke anhand der Blockchain-Datenstruktur überprüft und sobald eine erfolgreiche Überprüfung der Blockchain-Datenstruktur erfolgt ist, werden die Konfigurationsdaten verarbeitet. Eine Transaktion mit Konfigurationsdaten kann sich dabei auf ein einzelnes Gerät beziehen oder auf eine Gruppe gleichartig konfigurierter Geräte. Auch ist es möglich, in einer Transaktion mehrere Konfigurationsinformationen für unterschiedliche Geräte anzugeben.

Gemäß einer Ausgestaltung werden aus der Gerätekonfigurationsinformation mehrere Teilkonfigurationen für ein Gerät ermittelt und das Gerät entsprechend in mehreren Teilkonfigurationen konfiguriert. Dies hat den Vorteil, dass eine Transaktion nur geänderte Konfigurationsinformationen umfassen muss. Weiterhin kann eine Gerätekonfiguration für ein Gerät aus mehreren Teilkonfigurationen zusammengesetzt werden, wobei zumindest eine Teilkonfiguration durch eine Blockchain-Transaktion aktualisierbar ist. Dies hat den zusätzlichen Vorteil, dass das beschriebene Gerätekonfigurationsmanagement unter Verwendung einer Blockchain nur für bestimmte Konfigurationsmöglichkeiten eines Gerätes verwendbar ist.

Gemäß einer Ausgestaltung weisen die Teilkonfigurationen Prioritätsangaben auf zum Verhindern von Konflikten bei widersprüchlichen Teilkonfigurationen.

Gemäß einer Ausgestaltung weist die Gerätekonfigurationsinformation Projektierungsparameter, Betriebsmodusinformationen, Lizenz- oder Berechtigungsinformationen, Sicherheitszoneninformationen, Informationen zu Patches oder zu Software-Updates, Zugehörigkeitsinformationen des Gerätes in einem Backend oder Vorschriften für zulässige Konfigurationseinstellungen und/oder Vertragsinformationen für incentivefähige Konfigurationseinstellungen auf. Beispielsweise werden als Projektierungsparameter Schwellenwerte oder Regelungsparameter angegeben. Als Information zu einem Betriebsmodus bzw. einer Betriebsmodusplanung einer Anlage werden insbesondere ein Wartungsmodus oder verschiedenen Betriebsmodi zugeordnete Zeitfenster angegeben. Ferner ist eine Angabe zu einer Versiegelung eines Betriebsmodus oder eines operativen Betriebes enthalten. Ferner sind auf vorteilhafte Weise Informationen zu Trusted Peers, d.h. zu Gruppen von Geräten einer gemeinsamen Sicherheitszone enthalten. Beispielsweise wird ein Device Whitelisting oder Certificate Whitelisting in den Informationen hinterlegt, so dass in der Blockchain Identifizierer oder öffentliche Schlüssel oder Gerätezertifikate von Geräten einer Sicherheitszone manipulationsgeschützt hinterlegt sind. Ferner sind auf vorteilhafte Weise Freigabeinformationen zu einer App oder einem Softwarecode, wie beispielsweise Ausführungsberechtigungen auf bestimmten Geräten oder Laufzeitberechtigungen einer App oder Lizenzinformationen enthalten. Freigabeinformationen von Patches für bestimmte Geräte oder Gerätetypen und Anlagen können ebenso enthalten sein wie eine Angabe über verfügbare Patches oder Schwachstellen eines Systems oder betroffene Stellen eines Systems. Ferner kann eine Zuordnung eines Gerätes zu einem Mandanten oder einer Subskription eines Backend-Services hinterlegt sein. Somit ist eine Information enthalten, welche Geräte Daten an ein Backend übertragen, wobei das Backend die anfallenden Gebühren der angegebenen Subskription bzw. dem Mandanten zuordnet. Ebenso sind Group Policies oder Gruppenzuordnungsvorschriften zur Einschränkung zulässiger Konfigurationseinstellungen oder fest vorgegebener Konfigurationseinstellungen hinterlegbar. Somit ist nicht die Konfiguration explizit in der Blockchain enthalten, sondern eine Master-Information über zulässige Konfigurationswerte. Ebenso können Smart Contracts in Transaktionen enthalten sein, welche eine Vergütung beim Vorliegen bestimmter Zielgrößen versprechen. Beispielsweise kann ein Gerät seine Steuerungsfunktionalität anpassen und eine sogenannte contract-adaptive Steuerung durchführen, um Zielgrößen, beispielsweise Temperatur oder Wirkungsgrad oder Schadstoffausstoß den Zielgrößen anzupassen, um eine Vergütung zu erlangen.

Auf vorteilhafte Weise wird durch die Blockchain eine Konfiguration des Gerätes versiegelt. Ein Gerät aktiviert nur die entsprechend der Blockchain definierte, vorgegebene oder freigegebene Konfiguration.

Gemäß einer Ausgestaltung werden durch das Konfigurieren Funktionalitäten des Gerätes oder Parameter angepasst oder Aktionen durch das Gerät durchgeführt. Beispielsweise werden eine Netzwerkadressinformation, insbesondere eine IP-Adresse, ein DNS-Name, ein URL eines übergeordneten Steuerrechners für ein Feldgerät, ein zugeordnetes MES-System oder ein Diagnoseserver, angepasst. Beispielsweise werden Regelungsparameter für ein Regelelement, z.B. ein PID-Regler, verändert. Beispielsweise werden Schwellenwerte für eine Schutzüberwachung, wie beispielsweise eine maximal zulässige Spannung oder eine maximal zulässige Stromstärke oder eine maximal zulässige Blindleistung angepasst. Beispielsweise wird eine maximal zulässige Einspeiseleistung eines dezentralen Energieerzeugers auf dem Gerät festgelegt. Beispielsweise werden ein Steuerungsprogramm ausgewählt oder eine Steueroperation angepasst. Insbesondere wird eine Steuerungsfunktionalität so angepasst, dass Kriterien eines Smart Contracts einer Blockchain-Transaktion erfüllt werden. Beispielsweise wird eine Registrierung eines Gerätes an einem Backend-System angestoßen oder ein Laden und Installieren eines Software-Updates oder Firmware-Updates, beispielsweise ein Security Patch oder eine Zusatzfunktion, initiiert. Ferner wird beispielsweise eine angreifbare Gerätefunktionalität deaktiviert oder ein Gerät bei einem unsicheren Software-Stand gesperrt. Beispielsweise wird eine Geräte-Firewall auf dem Gerät als Personal Firewall oder eine Netzwerk-Firewall als Netzwerkinfrastrukturkomponente zur Filterung von Netzwerkverkehr zwischen Teilnetzen aktiviert oder deaktiviert oder angepasst. Beispielsweise wird ein Instrusion Detection System zur Erkennung von unzulässigem Programmcode oder unzulässigen Kommunikationsbeziehungen aktiviert oder angepasst.

Gemäß einer Ausgestaltung werden durch das Konfigurieren aktuelle Transaktionsdaten eines Konfigurationsvorganges durch das Gerät generiert zur Hinterlegung in einem aktuellen Block einer Blockchain. Beispielsweise werden abhängig von Projektierungsdaten eines Projektierungstools automatisch Transaktionen generiert, die vom aktuellen Stand der Projektierungsdaten abhängen, und durch einen Blockchain-Knoten in der Blockchain hinterlegt.

Gemäß einer Ausgestaltung umfasst das Überprüfen der Blockchain-Datenstruktur ein Validieren des Blockes anhand von mehreren nachfolgenden Blöcken in einer Blockchain. Es kann insbesondere abgewartet werden, bis sich eine Kette durchsetzt, d.h. andere Knoten im Blockchain-Netzwerk die Blockchain-Datenstruktur ebenfalls als gültig ansehen und entsprechend weitere Blöcke in dieser Kette erzeugen.

Die Erfindung betrifft ferner eine Komponente zum sicheren Konfigurieren eines Gerätes, aufweisend:
- Eine Schnittstelleneinrichtung zum Ermitteln einer auf einer Kryptowährung basierenden Blockchain-Datenstruktur, wobei die Blockchain-Datenstruktur mindestens einen Block mit Transaktionsdaten aufweist, und zum Ermitteln mindestens einer zu den Transaktionsdaten gehörigen Transaktionen, wobei die Transaktionen eine Gerätekonfigurationsinformation aufweist;
- eine erste Einheit geeignet zum Überprüfen der Blockchain-Datenstruktur;
- eine zweite Einheit zum Konfigurieren des Gerätes in Abhängigkeit von der Gerätekonfigurationsinformation.

Die Einheit kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Die Erfindung wird nachfolgend anhand von Ausführungsbeispielen mit Hilfe der Figuren näher erläutert. Es zeigen:
- Figur 1: eine schematische Darstellung des Verfahrens sowie der Komponente zum sicheren Konfigurieren eines Gerätes gemäß einem Ausführungsbeispiel der Erfindung,
- Figur 2: eine schematische Darstellung einer Blockchain-Datenstruktur mit Transaktionsdaten gemäß dem Ausführungsbeispiel der Erfindung,
- Figur 3: eine schematische Darstellung einer Transaktion gemäß dem Ausführungsbeispiel der Erfindung.

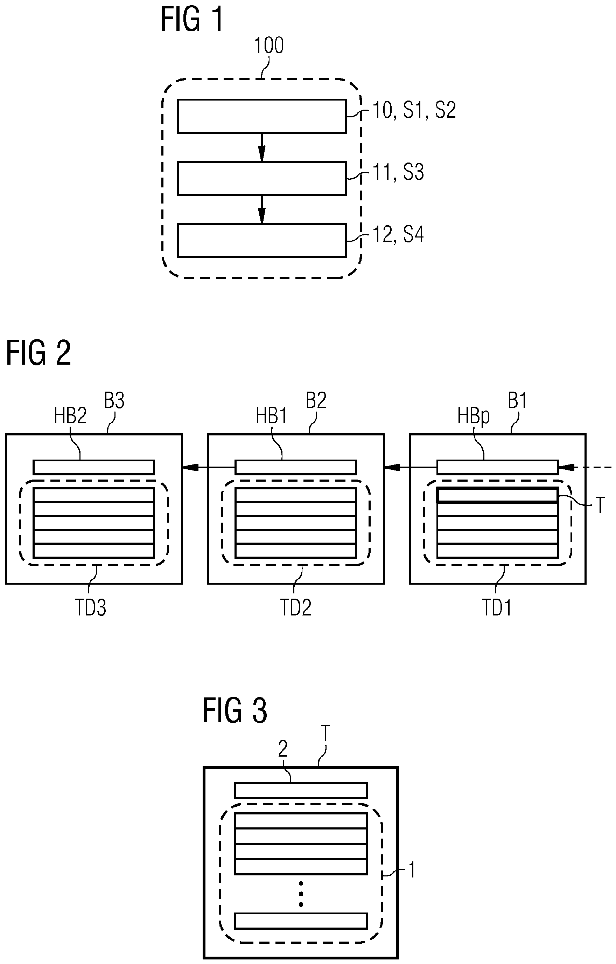

Figur 1 zeigt schematisch, wie eine Komponente 100 zum sicheren Konfigurieren eines Gerätes aufgebaut ist. Eine Schnittstelleneinrichtung 10 ist vorgesehen zum Ermitteln S1 einer auf einer Kryptowährung basierenden Blockchain-Datenstruktur, sowie zum Ermitteln S2 mindestens einer zu den Transaktionsdaten gehörigen Transaktion. Beispielsweise ist die Komponente auf einem Knoten eines Blockchain-Netzwerkes vorgesehen.

In einem lokalen Speicher veranlasst dieser Blockchain-Knoten ein Speichern der Blockchain-Datenstruktur sowie einzelner Transaktionen, welche im Blockchain-Netzwerk ausgetauscht werden. Der Knoten synchronisiert sich oder die Datenbasis einer zugeordneten Hardware auf diese Weise mit dem Netzwerk. Beispielsweise verfügt eine lokale Instanz so über die Transaktionen oder eine Auswahl der im Netz kursierenden Transaktionen, die den gebildeten Blöcken zugrundeliegen sowie insbesondere Abschnitten einer Blockchain, d.h. ein Ausschnitt von einer Blockchain-Datenstruktur aus einer Kette von Blöcken. Eine erste Prozessoreinheit 11 ist geeignet zum Überprüfen S3 der Blockchain-Datenstruktur. Diese erste Prozessoreinheit 11 kann auf einer zu dem Blockchain-Knoten zugehörigen Hardware vorgesehen sein oder direkt auf dem Gerät. Insbesondere kann bereits die Schnittstelleneinrichtung 10 auf dem Gerät vorgesehen sein.

Es ist ferner eine zweite Prozessoreinheit 12 zum Konfigurieren S4 des Gerätes in Abhängigkeit von der Gerätekonfigurationsinformation vorgesehen. Diese zweite Prozessoreinheit 12 kann zentral in einer Automatisierungsanlage vorgesehen sein, um Konfigurationen eines Gerätes oder mehrerer Geräte vorzunehmen. Ebenso kann die zweite Prozessoreinheit 12 auch direkt auf einem Gerät vorgesehen sein.

Figur 2 veranschaulicht schematisch eine Blockchain-Datenstruktur bestehend aus mehreren, z.B. drei, Blöcken B1 bis B3. Es ist zur Veranschaulichung ein Auszug aus einer Blockchain-Kette gezeigt mit drei Blöcken B1, B2, B3. Die Blöcke B1 bis B3 enthalten jeweils den Hashwert des Vorgängerblockes HBp, HB1, HB2. Der Block B1 weist den Hashwert HBp des vorhergehenden Blockes auf, der Block B2 weist in der Datenstruktur einen Eintrag auf mit dem Hashwert HB1 des Vorgängerblockes B1. Genauso weist der dritte Block B3 den HashWert HB2 des Vorgängerblockes B2 auf. Bei der Hash-Wertbildung eines vorangehenden Blockes gehen alle in dem Block befindlichen Daten, insbesondere die Transaktionen dieses Blockes sowie ferner weitere Daten wie Zeitstempel, eine digitale Signatur oder ein Proof-of-Work-Nachweis, in eine Funktion zur Bildung einer Prüfsumme, insbesondere eine Hash-Funktion, ein. Die Blöcke B1 bis B3 weisen zugehörige Transaktionsdaten TD1 bis TD3 auf, welche eine Transaktion oder mehrere Transaktionen betreffen. Es ist insbesondere lediglich ein Hashwert, der von einer Transaktion abhängt, hinterlegt. Neben Transaktionen an sich sind jeweils auch Zeitstempel, eine digitale Signatur und ein Proof-of-Work-Nachweis enthalten. Diese werden bei der Erstellung eines Blockes hinterlegt.

Figur 3 veranschaulicht eine Datenstruktur der Transaktion T, welche im Blockchain Netzwerk zwischen den Knoten ausgetauscht wird und Basis der Transaktionsdaten in den Blöcken ist. Insbesondere weist diese einen Bereich in der Datenstruktur auf, in welcher die Gerätekonfigurationsinformation 1 hinterlegt ist. Insbesondere ist zusätzlich eine Prüfsumme 2 vorgesehen, welche die Gerätekonfigurationsinformation 1 absichert.

Beispielshalber sind folgende Konfigurationsdaten in der Gerätekonfigurationsinformation 1 enthalten:
Subject: Siemens SiABC;V1.3;SN=3175438
Public Device Key: 3A76E21876EFA03787FD629A65E9E990...
Algorithm: ECC
Curve: brainpoolP160r1
Device Commissioning Identifer: ProtectionSwitch037E
ActiveApps: PredictiveMaintenance(basic), ContinuousSelfTest, StartupTest
ConfigParametersProtection: MaxI:60A, MaxU: 440V;
MaxCosPhi:17
ConfigParametersPID: P:1,2; I:0,7; D:0,2
ConfigDiagnosisServer: https://diag.sgoperator.org/push/device3175438

Das Gerät ermittelt - ggf. mit Hilfe der oben beschriebenen Komponente - Transaktionen, die das Gerät betreffen und modifiziert davon abhängig seine Konfiguration.

Obwohl die Erfindung im Detail durch die Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum sicheren Konfigurieren eines Gerätes, aufweisend die folgenden Schritte:
- Ermitteln (S1) einer auf einer Kryptowährung basierenden Blockchain-Datenstruktur, wobei die Blockchain-Datenstruktur mindestens einen Block (B1) mit Transaktionsdaten (TD1) aufweist;
- Ermitteln (S2) mindestens einer zu den Transaktionsdaten (TD1) gehörigen Transaktion (T), wobei die Transaktion (T) eine Gerätekonfigurationsinformation (1) aufweist, und wobei die Transaktionsdaten (TD1) eine Zugehörigkeit der Gerätekonfigurationsinformation (1) zu dem Gerät angeben und daraus zu dem Gerät gehörige Konfigurationsdaten ermittelt werden;
- Überprüfen (S3) der Blockchain-Datenstruktur; und
- Konfigurieren (S4) des Gerätes bei erfolgreicher Überprüfung in Abhängigkeit von der Gerätekonfigurationsinformation (1).

2. Verfahren nach Anspruch 1, wobei die Gerätekonfigurationsinformation (1) eine Konfiguration des Gerätes, einen Prüfwert einer Konfiguration des Gerätes und/ oder eine Referenz auf eine Konfiguration, insbesondere einen Uniform Resource Identifier, aufweisen.

3. Verfahren nach Anspruch 1 oder 2, wobei der Block als Transaktionsdaten (TD1) eine aus der Transaktion (T) oder aus mehreren Transaktionen gebildete Prüfsumme aufweist und die Transaktion (T) oder die mehreren Transaktionen mittels der Prüfsumme durch einen Blockchain-Knoten validiert werden.

4. Verfahren nach einem der vorstehenden Ansprüche, wobei die Transaktionsdaten (TD1) oder die Transaktion (T) durch eine kryptographische Prüfsumme geschützt sind und eine Überprüfung der Transaktionsdaten (TD1) oder der Transaktion (T) mit Hilfe der kryptographischen Prüfsumme und eines kryptographischen Schlüssels durchgeführt wird.

5. Verfahren nach Anspruch 4, wobei als kryptographischer Schlüssel ein Schlüssel eines zentral verwalteten Schlüsselpaares genutzt wird.

6. Verfahren nach Anspruch 4, wobei als kryptographischer Schlüssel ein Schlüssel eines innerhalb der Blockchain-Datenstruktur verwendeten Schlüsselpaares genutzt wird.

7. Verfahren nach einem der vorstehenden Ansprüche, wobei aus der Gerätekonfigurationsinformation (1) mehrere Teilkonfigurationen für ein Gerät ermittelt werden und das Gerät entsprechend den mehreren Teilkonfigurationen konfiguriert wird.

8. Verfahren nach Anspruch 7, wobei die Teilkonfigurationen Prioritätsangaben aufweisen zum Verhindern von Konflikten bei widersprüchlichen Teilkonfigurationen.

9. Verfahren nach einem der vorstehenden Ansprüche , wobei die Gerätekonfigurationsinformation (1) Projektierungsparameter, Betriebsmodusinformationen, Lizenz- oder Berechtigungsinformationen, Sicherheitszoneninformationen, Informationen zu Patches oder Software-updates, Zugehörigkeitsinformationen des Gerätes zu einem Backend, Vorschriften für zulässige Konfigurationseinstellungen und/ oder Vertragsinformationen für incentivefähige Konfigurationseinstellungen aufweist.

10. Verfahren nach einem der vorstehenden Ansprüche, wobei durch das Konfigurieren Funktionalitäten des Gerätes oder Parameter angepasst werden oder Aktionen durch das Gerät durchgeführt werden.

11. Verfahren nach einem der vorstehenden Ansprüche, wobei durch das Konfigurieren aktuelle Transaktionsdaten eines Konfigurationsvorganges durch das Gerät generiert werden zur Hinterlegung in einem aktuellen Block einer Blockchain.

12. Verfahren nach einem der vorstehenden Ansprüche, wobei das Überprüfen der Blockchain-Datenstruktur ein Validieren des Blockes anhand von mehreren nachfolgenden Blöcken in einer Blockchain umfasst.

13. Komponente zum sicheren Konfigurieren eines Gerätes, aufweisend:
- eine Schnittstelleneinrichtung (10) zum Ermitteln einer auf einer Kryptowährung basierenden Blockchain-Datenstruktur, wobei die Blockchain-Datenstruktur mindestens einen Block mit Transaktionsdaten aufweist, und zum Ermitteln mindestens einer zu den Transaktionsdaten gehörigen Transaktion, wobei die Transaktion eine Gerätekonfigurationsinformation aufweist, und wobei die Transaktionsdaten eine Zugehörigkeit der Gerätekonfigurationsinformation (1) zu dem Geräte angeben und daraus zu dem Gerät gehörige Konfigurationsdaten ermittelt werden;
- eine erste Einheit (11) geeignet zum Überprüfen der Blockchain-Datenstruktur;
- eine zweite Einheit (12) zum Konfigurieren des Gerätes in Abhängigkeit von der Gerätekonfigurationsinformation.

## Claims

1. Method for securely configuring a device, including the following steps:
- ascertaining (S1) a blockchain data structure based on a cryptocurrency, wherein the blockchain data structure has at least one block (B1) with transaction data (TD1);
- ascertaining (S2) at least one transaction (T) associated with the transaction data (TD1), wherein the transaction (T) includes a device configuration information item (1) and wherein the transaction data (TD1) specify an association of the device configuration information item (1) to the device and configuration data associated with the device are ascertained therefrom;
- checking (S3) the blockchain data structure; and
- configuring (S4) the device depending on the device configuration information item (1) in the case of a successful check.

2. Method according to Claim 1, wherein the device configuration information item (1) includes a configuration of the device, a test value of a configuration of the device and/or a reference to a configuration, in particular a uniform resource identifier.

3. Method according to Claim 1 or 2, wherein the block has a checksum formed by the transaction (T) or a plurality of transactions as transaction data (TD1) and the transaction (T) or the plurality of transactions are validated by means of the checksum by a blockchain node.

4. Method according to any one of the preceding claims, wherein the transaction data (TD1) or the transaction (T) are secured by a cryptographic checksum and a check of the transaction data (TD1) or the transaction (T) is carried out with the aid of the cryptographic checksum and a cryptographic key.

5. Method according to Claim 4, wherein a key of a centrally managed key pair is used as a cryptographic key.

6. Method according to Claim 4, wherein a key of a key pair used within the blockchain data structure is used as a cryptographic key.

7. Method according to any one of the preceding claims, wherein a plurality of partial configurations for a device are ascertained from the device configuration information item (1) and the device is configured in accordance with the plurality of partial configurations.

8. Method according to Claim 7, wherein the partial configurations have priority specifications in order to prevent conflicts in the case of contradictory partial configurations.

9. Method according to any one of the preceding claims, wherein the device configuration information item (1) has project planning parameters, mode of operation information items, licence or authorization information items, secure zone information items, information items in relation to patches or software updates, association information items of the device in relation to a backend, prescriptions for admissible configuration settings and/or contract information items for incentive-able configuration settings.

10. Method according to any one of the preceding claims, wherein functionalities of the device or parameters are adapted, or actions are carried out by the device, as a result of the configuring process.

11. Method according to any one of the preceding claims, wherein current transaction data of a configuration process are generated by the device for storage in a current block of a blockchain as a result of the configuring process.

12. Method according to any one of the preceding claims, wherein checking the blockchain data structure comprises validating the block on the basis of a plurality of successive blocks in a blockchain.

13. Component for securely configuring a device, comprising:
- an interface device (10) for ascertaining a blockchain data structure based on a cryptocurrency, wherein the blockchain data structure has at least one block with transaction data, and for ascertaining at least one transaction associated with the transaction data, wherein the transaction includes a device configuration information item and wherein the transaction data specify an association of the device configuration information item (1) to the device and configuration data associated with the device are ascertained therefrom;
- a first unit (11), suitable for checking the blockchain data structure;
- a second unit (12) for configuring the device depending on the device configuration information item.

## Revendications

1. Procédé destiné à la configuration sécurisée d'un appareil, présentant les étapes suivantes :
- détermination (S1) d'une structure de données en chaîne de blocs basée sur une cryptomonnaie, dans lequel la structure de données en chaîne de blocs présente au moins un bloc (B1) avec des données de transaction (TD1) ;
- détermination (S2) d'au moins une transaction (T) appartenant aux données de transaction (TD1), dans lequel la transaction (T) présente une information de configuration d'appareil (1) et dans lequel les données de transaction (TD1) indiquent une appartenance de l'information de configuration d'appareil (1) à l'appareil et des données de configuration appartenant à l'appareil en sont déterminées ;
- vérification (S3) de la structure de données en chaîne de blocs ; et
- configuration (S4) de l'appareil si vérification réussie, en fonction de l'information de configuration d'appareil (1).

2. Procédé selon la revendication 1, dans lequel l'information de configuration d'appareil (1) présente une configuration de l'appareil, une valeur de contrôle d'une configuration de l'appareil et/ou une référence à une configuration, en particulier à un identificateur de ressource uniforme.

3. Procédé selon la revendication 1 ou 2, dans lequel le bloc présente en tant que données de transaction (TD1), une somme de contrôle formée de la transaction (T) ou d'une pluralité de transactions et la transaction (T) ou la pluralité de transactions est validée par un nœud de chaîne de blocs au moyen de la somme de contrôle.

4. Procédé selon l'une des revendications précédentes, dans lequel les données de transaction (TD1) ou la transaction (T) est/sont protégée(s) par une somme de contrôle cryptographique et une vérification des données de transaction (TD1) ou de la transaction (T) est effectuée à l'aide de la somme de contrôle cryptographique et d'une clé cryptographique.

5. Procédé selon la revendication 4, dans lequel une clé d'une paire de clés administrée de manière centralisée est utilisée en tant que clé cryptographique.

6. Procédé selon la revendication 4, dans lequel une clé d'une paire de clés employée au sein de la structure de données en chaîne de blocs est utilisée en tant que clé cryptographique.

7. Procédé selon l'une des revendications précédentes, dans lequel plusieurs configurations partielles pour un appareil sont déterminées à partir de l'information de configuration d'appareil (1) et l'appareil est configuré conformément à la pluralité de configurations partielles.

8. Procédé selon la revendication 7, dans lequel les configurations partielles présentent des indications de priorité pour empêcher des conflits en cas de configurations partielles contradictoires.

9. Procédé selon l'une des revendications précédentes, dans lequel l'information de configuration d'appareil (1) présente des paramètres de conception, des informations de mode d'exploitation, des informations de licence ou d'autorisation, des informations de zones de sécurité, des informations sur des patchs ou des mises à jour logicielles, des informations d'appartenance de l'appareil à un backend, des instructions pour des paramètres de configuration autorisés et/ou des informations contractuelles pour des paramètres de configuration capables d'incitations.

10. Procédé selon l'une des revendications précédentes, dans lequel par la configuration, des fonctionnalités de l'appareil ou des paramètres sont adaptés ou des actions sont exécutées par l'appareil.

11. Procédé selon l'une des revendications précédentes, dans lequel par la configuration, des données de transaction actuelles d'une opération de configuration sont générées par l'appareil pour le placement dans un bloc actuel d'une chaîne de blocs.

12. Procédé selon l'une des revendications précédentes, dans lequel la vérification de la structure de données en chaîne de blocs comprend une validation du bloc à l'aide de plusieurs blocs consécutifs dans une chaîne de blocs.

13. Composante destinée à la configuration sécurisée d'un appareil, présentant
- un dispositif d'interface (10) pour déterminer une structure de données en chaîne de blocs basée sur une cryptomonnaie, dans lequel la structure de données en chaîne de blocs présente au moins un bloc avec des données de transaction, et pour déterminer au moins une transaction appartenant aux données de transaction, dans lequel la transaction présente une information de configuration d'appareil, et dans lequel les données de transaction indiquent une appartenance de l'information de configuration d'appareil (1) à l'appareil et des données de configuration appartenant à l'appareil en sont déterminées ;
- une première unité (11) appropriée pour contrôler la structure de données en chaîne de blocs ;
- une seconde unité (12) pour configurer l'appareil en fonction de l'information de configuration d'appareil.
